# DEMANDE DE BREVET EUROPEEN

(11) **EP 2 614 991 A1**
(43) Date de publication de la demande: **17.07.2013**
(21) Numéro de dépôt: 13150489.6
(22) Date de dépôt: 08.01.2013
(51) Int. Cl.: B60Q 1/00, F21S 8/10

(54) **Dispositif d'éclairage et/ou de signalisation de véhicule**

(30) Priorité: 10.01.2012 FR 1250226
(71) Demandeur: PEUGEOT CITROËN AUTOMOBILES SA, 78140 Velizy-Villacoublay (FR)
(72) Inventeur: Peron, Rodolphe, 95220 Herblay (FR)

(57) **Abrégé**

L'invention a trait à un dispositif (1) d'éclairage et/ou de signalisation de véhicule comprenant un porte-lampe (5) assemblé à un boîtier de feu (3) par des moyens de fixation (7), un joint d'étanchéité étant disposé entre le porte-lampe (5) et le boîtier de feu (5) au niveau de leur interface de contact, remarquable en ce que le porte-lampe (5) comprend au moins un moyen de guidage (9, 11) destiné à coopérer avec au moins un moyen de guidage (13, 15) complémentaire du boîtier de feu (3) afin de diriger le mouvement d'approche dudit porte-lampe (5) en direction dudit boîtier de feu (3) au moment de leur assemblage.

## Description

L'invention s'inscrit dans le domaine de l'éclairage et/ou de la signalisation de véhicule. L'invention a trait à des dispositifs d'éclairage et/ou de signalisation de véhicule et à leurs éléments constitutifs tels que des porte-lampe et des boîtiers de feu. Plus particulièrement, l'invention s'adresse aux dispositifs d'éclairage de véhicule et/ou à leurs éléments constitutifs présentant des moyens d'étanchéité et/ou des connexions électriques.

Les dispositifs d'éclairage et/ou de signalisation de véhicule comprennent généralement un boîtier de feu doté d'une ouverture et un porte-lampe qui permet de clore cette ouverture. L'ouverture permet d'accéder aux sources lumineuses, par exemple des ampoules ou des LEDs, en vue de leur remplacement en cas de défaillance. Il a été constaté que l'assemblage du porte-lampe sur le boîtier de feu pouvait générer quelques problèmes.

Un premier problème concerne l'étanchéité du dispositif. En effet les dispositifs d'éclairage et/ou de signalisation doivent pouvoir être fermés de manière étanche afin de protéger notamment le passage des connexions électriques d'éventuelles arrivées d'eau de pluie ou de lavage. Un joint d'étanchéité circonférentiel est alors disposé au niveau de l'interface de contact entre le boîtier de feu et le porte-lampe.

Ainsi, le document FR2785037 décrit un projecteur d'automobile dont le boîtier s'ouvre de manière frontale et est fermé par une glace. L'assemblage de la glace sur le boîtier se fait par encliquetage et un joint d'étanchéité est agencé pour opérer entre la glace et le boîtier au niveau de leur interface de contact. Le problème rencontré par ce type de dispositif vient du fait que le mouvement d'approche de la glace vers le boîtier en vue de son assemblage, peut se faire avec un léger désaxage ou déplacer légèrement le joint. Le joint ne peut alors plus assurer un recouvrement correct de ses surfaces d'appui, ce qui nuit à sa fonction d'étanchéité. Des solutions restent donc à trouver pour répondre aux contraintes liées au bon positionnement du joint.

Par ailleurs, il convient de s'assurer que la pression exercée sur le joint d'étanchéité soit uniformément répartie afin d'en éviter une dégradation anticipée. C'est pourquoi, dans le contexte d'un système de fixation d'un feu, le document FR2925418 propose un boîtier de feu de signalisation de véhicule présentant un évidement central traversé par le connecteur électrique du porte-lampe. Les faces latérales du connecteur présentent un filetage extérieur permettant de coopérer avec un écrou central pour d'une part fixer le boîtier de feu sur sa structure porteuse, et d'autre part répartir uniformément l'effort de compression du joint d'étanchéité placé entre le boîtier de feu et sa structure porteuse. Néanmoins une telle solution n'est pas applicable à l'assemblage d'un porte-lampe sur un boîtier de feu.

Un autre problème rencontré lors de l'assemblage des boîtiers de feu et de leur porte-lampe vient du fait que certains boîtiers de feu comprennent une pluralité de sources lumineuses qui sont alimentées indépendamment et dont les connexions sont portées par le porte-lampe en vue d'un branchement sur le boîtier. Les branchements se font par des arrangements de type fiche-prise. Les fiches saillantes (prises mâles) et relativement fines, doivent être insérées dans des orifices correspondants (prises femelles) relativement ajustés. Au moment de l'assemblage, un bon positionnement du porte-lampe est alors nécessaire pour éviter d'endommager les fiches mâles en les cognant contre d'autres éléments ou contre le bord de leur orifice dédié. La force de poussée exercée par l'utilisateur pour réaliser l'assemblage doit être parallèle à l'axe longitudinal des orifices pour éviter de tordre les fiches lors de leur branchement.

Enfin, des difficultés sont rencontrées par le positionnement habituel des dispositifs d'éclairage et/ou de signalisation dans le véhicule. Ils sont en effet classiquement insérés dans des logements exigus qui les cachent en partie à la vue de l'utilisateur, si bien que ni la position, ni l'orientation, ni la trajectoire du porte-lampe ne peuvent être contrôlées visuellement lors de l'opération d'assemblage. Ce type de montage est appelé montage en aveugle et demande un soin particulier ou une certaine habitude pour être exécuté correctement. Or le conducteur d'un véhicule peut être amené à effectuer lui-même l'opération de montage ou d'assemblage du porte-lampe sur le boîtier de feu dans le cadre des opérations courantes d'entretien de son véhicule, et risque donc de le monter de manière non-étanche et/ou en endommageant une partie des éléments de connexion.

L'invention a pour objectif de résoudre au moins un des problèmes rencontrés dans l'art antérieur. L'invention propose dispositif d'éclairage et/ou de signalisation de véhicule dont l'assemblage du porte-lampe sur le boîtier de feu est facilité en ce qu'il diminue ou supprime les risques d'endommagement des éléments de connexion des sources lumineuses et/ou du joint d'étanchéité et/ou un déplacement de ce joint, notamment lorsque cet assemblage se fait avec une visibilité réduite.

A cet effet l'invention a pour objet un dispositif d'éclairage et/ou de signalisation de véhicule comprenant un porte-lampe assemblé à un boîtier de feu par des moyens de fixation, préférentiellement un joint d'étanchéité est disposé entre le porte-lampe et le boîtier de feu au niveau de leur interface de contact, le dispositif étant remarquable en ce que le porte-lampe comprend au moins un moyen de guidage destiné à coopérer avec au moins un moyen de guidage complémentaire du boîtier de feu afin de diriger le mouvement d'approche dudit porte-lampe en direction dudit boîtier de feu au moment de leur assemblage.

Selon des modes particuliers de réalisation, l'ensemble peut comprendre l'une ou plusieurs des caractéristiques suivantes, prises isolément ou selon toutes les combinaisons techniquement possibles :
- le porte-lampe présente un corps définissant un pourtour et comprend au moins deux moyens de guidage disposés latéralement sur son pourtour de part et d'autre de son corps et coopérant avec au moins deux moyens de guidage complémentaires du boîtier de feu, de préférence les moyens de guidage du porte-lampe présentent des dimensions différentes pour assurer une fonction de détrompeur.
- les moyens de guidage du porte-lampe et du boîtier de feu sont placés extérieurement au périmètre défini par le joint d'étanchéité.
- le porte-lampe étant assemblé sur le boîtier de feu dans un mouvement de translation suivant une direction d'assemblage, le dispositif est remarquable en ce que les moyens de guidage du porte-lampe forment des glissières s'étendant longitudinalement selon la direction d'assemblage et les moyens de guidage du boîtier de feu forment des doigts saillants destinés à s'insérer dans les glissières, de préférence les glissières sont dotées de parois latérales intérieures parallèles entre elles et présentant un angle non droit avec le pourtour du porte-lampe où les glissières sont disposées afin d'assurer une fonction de détrompeur.
- le porte-lampe comprend deux moyens de guidage ouverts en direction de l'extérieur du corps du porte-lampe et orientés pour que leurs ouvertures soient alignées selon une direction d'alignement donnée et la distance d'écartement entre les moyens de guidage complémentaires du boîtier de feu est supérieure à la distance d'écartement entre les moyens de guidage du porte-lampe de sorte que l'insertion des moyens de guidage complémentaires du boîtier de feu dans les moyens de guidage du porte-lampe autorise un jeu selon la direction d'alignement. La direction d'alignement est sensiblement perpendiculaire à la direction d'assemblage.
- le porte-lampe comprend en outre au moins un moyen d'indexage destiné à coopérer avec au moins un moyen d'indexage complémentaire du boîtier de feu, les moyens d'indexage étant configurés pour définir et fixer la position du porte-lampe relativement au boîtier de feu selon la direction d'alignement des moyens de guidage du porte-lampe.
- les moyens de guidage du boîtier de feu présentent une longueur inférieure à celle de ses moyens d'indexage, de sorte que lesdits moyens de guidage et d'indexage du boîtier de feu entrent en contact avec les moyens de guidage et d'indexage du porte-lampe de manière successive.
- les moyens de fixation sont des moyens d'encliquetage régulièrement répartis sur le pourtour du corps du porte-lampe, de préférence ils comprennent au moins deux languettes d'encliquetage s'insérant dans au moins deux pattes élastiques. De préférence encore ils comprennent au moins trois, et de préférence au moins quatre, languettes d'encliquetage s'insérant dans des pattes élastiques dédiées, lesdites languettes étant disposées en étoiles. Avantageusement les languettes sont portées par le porte-lampe et régulièrement réparties sur son pourtour.

L'invention a également pour objet un boîtier de feu et ou un porte-lampe remarquable en ce qu'il est configuré pour être utilisé dans un dispositif d'éclairage et/ou de signalisation tel que défini plus haut.

Enfin, l'invention a pour objet un véhicule remarquable en ce qu'il comprend un dispositif d'éclairage et/ou de signalisation tel que défini plus avant.

Comme on l'a compris à la lecture de la définition qui vient d'en être donnée, l'invention consiste à pourvoir un porte-lampe et un boîtier de feu de moyens de guidage permettant de diriger leur mouvement d'approche l'un vers l'autre durant l'opération d'assemblage vers une position compatible avec les exigences relatives à une bonne utilisation d'un joint d'étanchéité et/ou une préservation des éléments de connexions. L'invention consiste à introduire une interface imposant un contact physique entre le porte-lampe et le boîtier de feu qui soit préalable au contact du joint sur ses deux surfaces d'appui et/ou à l'introduction des éléments de connexions mâles dans les éléments de connexions femelles. L'invention consiste à rendre obligatoire le coulissement du porte-lampe vers le boîtier de feu le long de cette interface de sorte à s'assurer que ce mouvement soit dirigé selon une direction préalablement déterminée. L'invention permet selon un autre aspect d'utiliser ces moyens de guidage comme détrompeur.

L'invention est avantageuse en ce que la position du joint n'est pas modifiée lors de l'approche du porte-lampe puisque sa trajectoire est contrôlée. Le joint entre en contact avec ses surfaces d'appui sur toute son étendue de manière simultanée ce qui permet d'en éviter les pincements. Le risque de heurter les fiches, ou éléments de connexions mâles, contre des éléments avoisinants est réduit et leur mise en position en face des orifices, ou éléments de connexions femelles, est garantie. Par ailleurs l'orientation relative des prises mâles et femelles est définie pour éviter que les prises mâles ne se tordent lors de leur introduction dans les prises femelles.

Ces moyens permettent de favoriser un branchement optimal des connexions et éviter les pannes liées à de mauvais raccords. La configuration des moyens de guidage permet à tout utilisateur d'effectuer l'opération d'assemblage en toute sécurité, même dans des conditions à visibilité réduite.

Selon un autre aspect de l'invention la fixation du porte-lampe sur le boîtier se fait par encliquetage. Les moyens de fixation, ou moyens de clippage, sont régulièrement répartis sur le pourtour du porte-lampe afin d'assurer une répartition homogène de l'effort de compression du joint. L'orientation forcée du porte-lampe relativement au boîtier de feu permet de s'assurer que l'engagement de tous les moyens de fixation élastiques mis en oeuvre et évite les phénomènes d'arc-boutement pouvant résulter d'un défaut ou d'un retard d'engagement d'au moins des moyens de fixation. Un tel arc-boutement modifierait au moins localement l'orientation du porte-lampe et nuirait à la préservation des éléments de connexion et du joint.

D'autres caractéristiques et avantages de la présente invention seront mieux compris à l'aide de la description donnée à titre d'exemple et en référence aux dessins parmi lesquels :
- La figure 1 est une représentation schématique partielle d'un dispositif d'éclairage et/ou de signalisation selon l'invention comprenant l'assemblage d'un porte-lampe monté et d'un boîtier de feu.
- La figure 2 est une représentation schématique d'un porte-lampe selon l'invention.
- La figure 3 illustre l'engagement des moyens de guidage d'un porte-lampe avec les moyens de guidage complémentaires d'un boîtier de feu selon l'invention.
- La figure 4 illustre l'engagement des moyens d'indexage d'un porte-lampe avec les moyens d'indexage complémentaires d'un boîtier de feu selon l'invention.

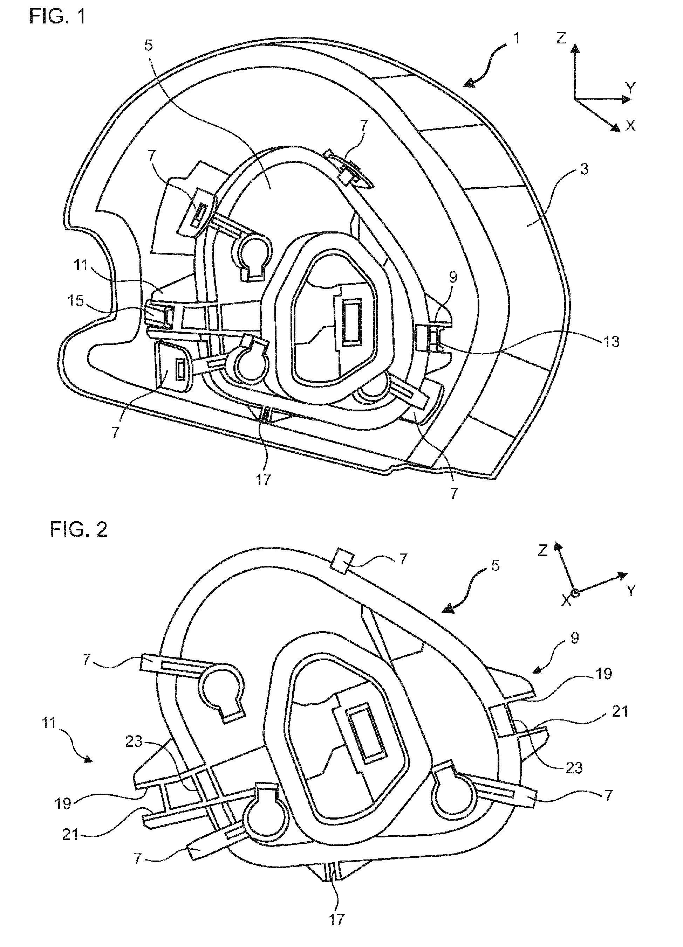

On se référera en premier lieu à la figure 1 représente un dispositif d'éclairage et/ou de signalisation (1) d'un véhicule tel que vu depuis sa face arrière. La face arrière est définie comme étant l'opposé de la face normale d'émission de lumière. Dans notre exemple de réalisation, le dispositif d'éclairage et/ou de signalisation (1) est placé à l'arrière d'un véhicule, néanmoins l'invention est également applicable aux dispositifs d'éclairage et/ou de signalisation disposés à l'avant des véhicules.

Sur cette figure est tracé un référentiel tridimensionnel comprenant trois axes (X, Y, Z). L'axe X correspond à la direction longitudinale du véhicule, il est orienté suivant le sens de la marche conventionnel du véhicule. L'axe Y correspond essentiellement à la direction transversale du véhicule et est orienté vers la gauche du véhicule. L'axe Z correspond essentiellement à la direction verticale et est orienté vers le haut.

Le dispositif d'éclairage et/ou de signalisation (1) comprend un boîtier de feu (3) et un porte-lampe (5). Le porte-lampe (5) est fixé sur le boîtier de feu (3) par des moyens de fixation (7) qui permettent de les maintenir plaqués l'un contre l'autre suivant l'axe d'assemblage (ou axe X) par exemple par encliquetage. Un joint (non représenté) est disposé au niveau de l'interface entre le porte-lampe (5) et le boîtier de feu (3) pour assurer l'étanchéité de l'ensemble. Les moyens de fixation (7) comprennent préférentiellement une pluralité de moyens de clippage. Selon un mode de réalisation les moyens de fixation (7) comprennent des languettes de clippage portées par le porte-lampe (5) destinées à se clipper sur des pattes élastiques portées par le boîtier de feu (3).

Les moyens de fixation (7), par exemple au nombre de quatre, sont disposés en étoile afin de d'exercer des efforts de pression sur tout le pourtour du porte-lampe (5), et garantir une bonne répartition des efforts au niveau du joint pour assurer l'étanchéité du feu. La répartition homogène des moyens de fixation (7) sur le pourtour du porte-lampe (5) permet en outre de ne pas dégrader le joint en termes d'écrasement. Au moment de l'assemblage du porte-lampe (5) sur le boîtier de feu (3), la patte élastique du boîtier (5) se déforme. Une pente est définie sur les languettes de clippage pour faciliter leur introduction dans les pattes élastiques et la déformation desdites pattes élastiques. On comprend qu'une certaine force est à exercer pour déformer simultanément les pattes élastiques lors de l'assemblage du porte-lampe (5) sur son boîtier (3). L'application de cette force serait à même, sans l'invention, de modifier le positionnement du porte-lampe (5) relativement au boîtier de feu (3) ou du joint d'étanchéité. L'invention est particulièrement avantageuse, comme nous allons le voir, en ce qu'elle associe, à ce système de fixation par encliquetage, au moins un moyen de guidage permettant de mettre et de maintenir en position le porte-lampe relativement au boîtier de feu pour ne pas risquer d'endommager les éléments de connexion électrique et le joint d'étanchéité et/ou pour ne pas risquer de déplacer ledit joint durant l'opération d'assemblage.

Selon l'invention, les moyens de guidage (9, 11, 13, 15) du dispositif (1) comprennent au moins un moyen de guidage (9, 11) porté par le porte-lampe (5) qui coopère avec au moins un moyen de guidage complémentaire (13, 15) porté par le boîtier de feu (3). Les moyens de guidage (9, 11, 13, 15) permettent de diriger le porte-lampe (5) vers le boîtier de feu (3) lors de son mouvement d'approche en vue de leur assemblage en contrôlant leur trajectoire de sorte à éviter un désaxage de l'un par rapport à l'autre et en contrôlant leur orientation relative pour garantir l'intégrité des éléments de connexion électrique qu'ils présentent au moment de leur branchement.

Le ou les moyens de guidage (9, 11) du porte-lampe (5) peuvent se présenter sous forme de fourreaux ou de glissières disposées latéralement sur le pourtour de son corps de manière saillante. Les glissières (9, 11) sont destinées à recevoir des doigts (13, 15) portés par le boiter de feu (5). Il est également possible que les moyens de guidage du porte-lampe ne soient pas saillants s'ils n'interfèrent pas avec le joint d'étanchéité. Selon l'invention, les moyens de guidage (9, 11) sont agencés pour être placés à l'extérieur du périmètre défini par le joint d'étanchéité entre le porte-lampe (5) et le boîtier de feu (3). Le ou les moyens de guidage (13, 15) du boîtier de feu (3), à savoir les doigts (13, 15), sont saillants en direction de l'extérieur du boîtier de feu (5). Les doigts (13, 15) s'étendent selon la direction d'assemblage du porte-lampe (5) sur le boîtier de feu (3) si bien que leur insertion dans les glissières (9, 11) du porte-lampe (5) impose une direction de mouvement à ce dernier, à savoir la direction d'assemblage. Le contact entre les moyens de guidage (9, 11, 13, 15) du dispositif d'éclairage et/ou de signalisation (1) se fait préalablement au contact des moyens d'encliquetage ou de fixation (7) entre le porte-lampe (5) et le boîtier de feu (3). Il se fait également préalablement au branchement des connexions électriques du porte-lampe (5) et du boîtier de feu (3). Ce contact préalable permet notamment de préserver les éléments de connectique de toute dégradation, puisqu'il assure un positionnement préalable du porte-lampe (5) avant son branchement sur le boîtier (3).

Au passage on notera que si les doigts de guidage sont préférentiellement portés par le boîtier de feu de sorte à ce que les moyens de guidage s'étendent en dehors de ce dernier, il est également envisageable pour l'homme du métier que les doigts de guidage soient portés par le porte-lampe, à condition toutefois que les glissières alors portés par le boîtier de feux soient par exemple des trous borgnes ne remettant pas en question l'étanchéité du dispositif (1).

On se réfère à présent à la figure 2 présentant une porte-lampe (5). Selon l'invention, les moyens de guidage (9, 11) se présentent sous forme d'une glissière (9,11) ouverte en direction de l'extérieur du corps du porte-lampe (5) et dont les parois latérales (19, 21) intérieures forment deux plans d'appui essentiellement parallèles. De préférence, les glissières (9, 11) présentent une section sensiblement constante sur toute leur hauteur. Les parois latérales (19, 21) intérieures des glissières (9, 11) sont destinées à venir en contact les parois latérales extérieures des doigts (13,15) associés.

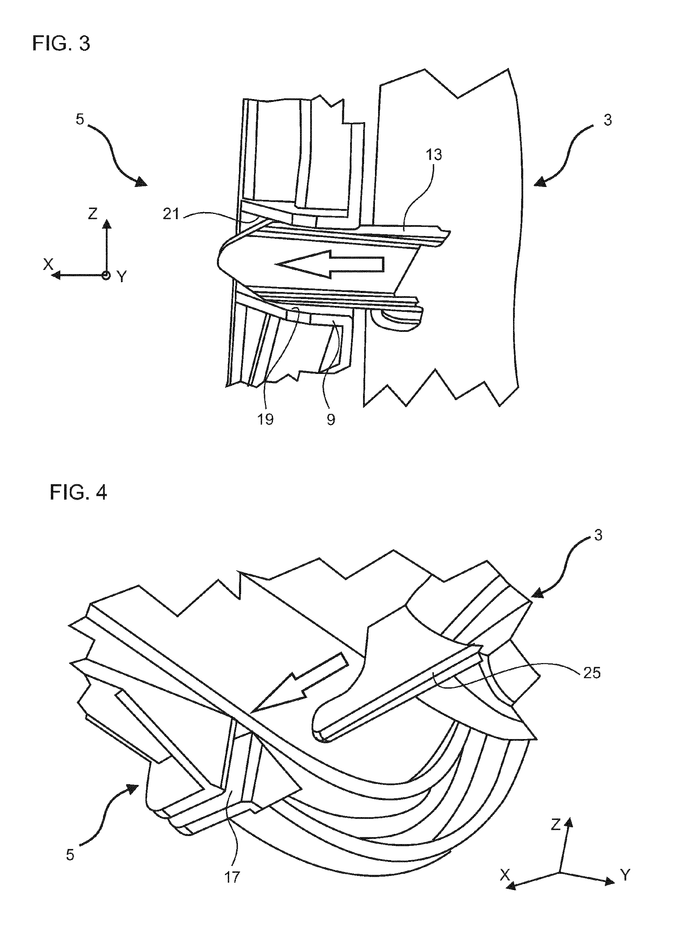

Avantageusement, et comme illustré sur la figure 3, au moins un doigt (13) présente une extrémité supérieure arrondie de sorte que son sommet montre une largeur moins importante que sa base. La distance d'écartement, de préférence constante, entre les parois (19, 21) de la glissière (9) est égale à la largeur maximale présentée par le doigt (13) à sa base. Ainsi, l'insertion du doigt (13) dans la glissière (9) est facilitée puisqu'un certain jeu est provisoirement autorisé selon la hauteur (axe Z). Ce degré de liberté est progressivement supprimé durant le mouvement d'enfoncement du porte-lampe (5). Le doigt (13) présente, succédant à son extrémité supérieure arrondie, des surfaces latérales planes qui vont coopérer avec les parois (19, 21) pour orienter le porte-lampe et définir son positionnement selon la hauteur (axe Z). L'orientation du porte-lampe (5) relativement au boîtier de feu (5) se fait progressivement durant le mouvement de translation ou d'enfoncement dudit doigt (13) dans ladite glissière (9) selon l'axe d'assemblage (axe X). Le porte-lampe (5) est ainsi orienté pour que toutes ses languettes de clippage viennent en contact avec les pattes élastiques du boîtier de feu (5) de manière simultanée. De préférence, la glissière (9) présente une certaine longueur correspondant sensiblement à la longueur du doigt (13) afin de forcer cette orientation et d'éviter des phénomènes d'arc-boutement du porte-lampe (5) au moment de son assemblage sur le boîtier de feu (3).

En revenant à la figure 1, on note que, selon l'invention, le porte-lampe (5) présente préférentiellement deux moyens de guidage (9, 11) destinés à être engagé par deux moyens de guidage (13, 15) complémentaires du boîtier de feu. Ces moyens de guidage sont préférentiellement disposés alignés de part et d'autre du corps du porte-lampe (5), par exemple ils sont diamétralement opposés. Avantageusement, les moyens de guidage (9, 11) sont implantés à des hauteurs différentes, et/ou sont inclinés de sorte que leurs parois latérales (21, 23) ne soient pas perpendiculaires aux côtés du pourtour du porte-lampe (5) d'où ils font saillie. Cette singularité permet de conférer un aspect de détrompeur aux moyens de guidage (9, 11). Il est également possible d'obtenir un tel résultat en utilisant des doigts (13, 15) de largeur différente et donc des glissières (9, 11) associées de taille différente des deux côtés du porte-lampe (5). Avantageusement, les parois latérales (19, 21) intérieures des deux glissières (9, 11) sont parallèles entre elles. De la sorte les deux moyens de guidage (9, 11) sont ouverts chacun en direction de l'extérieur du porte-lampe (5) et orientés pour que leurs ouvertures soient alignées selon une direction d'alignement donnée. L'écartement entre les fonds (23) des glissières du porte-lampe (5) est inférieur ou égal à l'écartement présenté par les doigts (13, 15) du boîtier de feu (3). Ceci permet de faciliter encore l'insertion des doigts (13, 15) dans les glissières (9,11) en laissant provisoirement un certain jeu selon l'axe d'alignement (correspondant par exemple à l'axe Y). La mise en position finale pouvant être effectuée comme nous allons le voir par des moyens complémentaires d'indexage.

Avantageusement, le porte-lampe (5) comprend en outre au moins un moyen d'indexage (17) qui s'engage dans au moins un moyen d'indexage complémentaire du boîtier de feu (3) et qui permet de définir et fixer la position du porte-lampe (5) selon l'axe d'alignement. Le moyen d'indexage (25) du boîtier de feu (5) est représenté en figure 4. Il forme par exemple une patte d'indexage allongée suivant la direction d'assemblage du porte-lampe (5) sur le boîtier de feu (3). Le moyen d'indexage (17) du porte-lampe (5) forme une fente d'indexage destiné à recevoir la patte d'indexage (25) qui s'étend longitudinalement suivant la direction d'assemblage. La patte d'indexage (25) présente une longueur inférieure aux doigts de guidage de sorte à ne s'insérer dans la fente (17) que postérieurement à l'insertion des doigts de guidage dans les glissières. De préférence, la patte d'indexage (25) ne pénètre dans la fente (17) que lorsque les pattes élastiques de fixation du boîtier ont commencé à se déformer.

Le mouvement d'approche pour l'assemblage est dirigé selon trois points non alignés formant un plan, à savoir les moyens de guidage (9, 11, 13, 15) qui interviennent en premier et qui laissent de préférence un léger degré de liberté en translation selon l'axe d'alignement et les moyens d'indexage qui interviennent ensuite pour guider et éventuellement corriger la position du porte lampe selon l'axe d'alignement. La mise en position et l'orientation du porte-lampe (3) se fait donc en deux temps par des moyens se mettant en oeuvre de manière successive. Le porte-lampe étant guidé selon l'axe Z par le biais des moyens de guidage et selon l'axe Y (l'axe d'alignement) par le biais des moyens d'indexage, son orientation défini un plan qui translate uniquement selon l'axe X (l'axe d'assemblage). On voit donc comment l'invention permet de garantir le bon positionnement et la bonne orientation des prises mâles relativement aux prises femelles lors du leur branchement d'une part, et comment elle permet d'éviter tout pincement du joint d'étanchéité au moment de l'assemblage.

L'invention est remarquable en ce que les moyens de guidage autorisent un jeu de positionnement en début de course qui est progressivement supprimé. La suppression du jeu se fait par la coopération des moyens d'indexage et/ou par les différences de largeur présentées par les doigts.

On aura bien compris que cette configuration permet de maîtriser la cinématique que suit le porte-lampe lors de sa fixation sur le boîtier de feu. Sa trajectoire est connue et évite que des parties non prévues à cet effet ne se heurtent. L'orientation permet aux surfaces d'appui du porte-lampe et du boîtier de feu de se présenter parallèlement l'une à l'autre au moment de l'assemblage. Le joint qui s'insère entre elles est alors comprimé de manière homogène sur toute sa longueur sans risquer d'être chassé ou pincé.

Les fiches sont présentées suivant l'axe qu'elles partagent avec l'orifice de branchement. Les risques de torsions et de mauvais contacts sont supprimés. La longueur et la forme des moyens de guidage permettent d'effectuer l'assemblage en aveugle. Un pré-positionnement et une orientation approximatifs du porte-lampe est suffisant pour le monter de manière sûre en termes d'étanchéité de et branchements électriques sur le boîtier de feu.

## Revendications

1. Dispositif (1) d'éclairage et/ou de signalisation de véhicule comprenant un porte-lampe (5) assemblé à un boîtier de feu (3) par des moyens de fixation (7), préférentiellement un joint d'étanchéité est disposé entre le porte-lampe (5) et le boîtier de feu (5) au niveau de leur interface de contact, le dispositif étant **caractérisé en ce que** le porte-lampe (5) comprend au moins un moyen de guidage (9, 11) destiné à coopérer avec au moins un moyen de guidage (13, 15) complémentaire du boîtier de feu (3) afin de diriger le mouvement d'approche dudit porte-lampe (5) en direction dudit boîtier de feu (3) au moment de leur assemblage.

2. Dispositif (1) d'éclairage et/ou de signalisation selon la revendication 1, le porte-lampe (5) présente un corps définissant un pourtour **caractérisé en ce que** le porte-lampe (5) comprend au moins deux moyens de guidage (9, 11) disposés latéralement sur son pourtour de part et d'autre de son corps et coopérant avec au moins deux moyens de guidage (13, 15) complémentaires du boîtier de feu (3), de préférence les moyens de guidage (9, 11) du porte-lampe (5) présentent des dimensions différentes pour assurer une fonction de détrompeur.

3. Dispositif (1) d'éclairage et/ou de signalisation selon la revendication 1 ou 2, le porte-lampe (5) étant assemblé sur le boîtier de feu (3) dans un mouvement de translation suivant une direction d'assemblage, **caractérisé en ce que** les moyens de guidage (9, 11) du porte-lampe (5) forment des glissières s'étendant longitudinalement selon la direction d'assemblage et les moyens de guidage (13, 15) du boîtier de feu forment des doigts saillants destinés à s'insérer dans les glissières (9,11), de préférence les glissières (9, 11) sont dotées de parois latérales (19, 21) intérieures parallèles entre elles et présentant un angle non droit avec le pourtour du porte-lampe (5) où les glissières (9, 11) sont disposées afin d'assurer une fonction de détrompeur.

4. Dispositif (1) d'éclairage et/ou de signalisation selon la revendication 2 ou 3, **caractérisé en ce que** le porte-lampe (5) comprend deux moyens de guidage (9, 11) ouverts en direction de l'extérieur du corps du porte-lampe (5) et orientés pour que leurs ouvertures soient alignées selon une direction d'alignement donnée et **en ce que** la distance d'écartement entre les moyens de guidage (13, 15) complémentaires du boîtier de feu (3) est supérieure à la distance d'écartement entre les moyens de guidage (9, 11) du porte-lampe (5) de sorte que l'insertion des moyens de guidage (13, 15) complémentaires du boîtier de feu (3) dans les moyens de guidage (9, 11) du porte-lampe (5) autorise un jeu selon la direction d'alignement.

5. Dispositif (1) d'éclairage et/ou de signalisation selon la revendication 4 **caractérisé en ce que** le porte-lampe (5) comprend en outre au moins un moyen d'indexage (17) destiné à coopérer avec au moins un moyen d'indexage complémentaire (25) du boîtier de feu (3), les moyens d'indexage (17, 25) étant configurés pour définir et fixer la position du porte-lampe (5) relativement au boîtier de feu (3) selon la direction d'alignement des moyens de guidage (9, 11) du porte-lampe (5).

6. Dispositif (1) d'éclairage et/ou de signalisation selon la revendication 5, **caractérisé en ce que** les moyens de guidage (13, 15) du boîtier de feu (5) présentent une longueur inférieure à celle de ses moyens d'indexages (25), de sorte que lesdits moyens de guidage (13, 15) et d'indexage (25) du boîtier de feu (3) entrent en contact avec les moyens de guidage (9, 11) et d'indexage (17) du porte-lampe (5) de manière successive.

7. Dispositif (1) d'éclairage et/ou de signalisation selon l'une des revendications 1 à 6 **caractérisé en ce que** les moyens de fixation (7) sont des moyens d'encliquetage régulièrement répartis sur le pourtour du corps du porte-lampe (5), de préférence ils comprennent au moins deux languettes d'encliquetage s'insérant dans au moins deux pattes élastiques.

8. Boîtier de feu (3) **caractérisé en ce qu'il** est configuré pour être utilisé dans un dispositif (1) d'éclairage et/ou de signalisation selon l'une des revendications 1 à 7.

9. Porte-lampe (5) **caractérisé en ce qu'il** est configuré pour être utilisé dans un dispositif (1) d'éclairage et/ou de signalisation selon l'une des revendications 1 à 7.

10. Véhicule **caractérisé en ce qu'il** comprend un dispositif (1) d'éclairage et/ou de signalisation selon l'une des revendications 1 à 7.
